Europäisches Patentamt

European Patent Office

Office européen des brevets

(11) Veröffentlichungsnummer: **0 263 302**
**A2**

# (12) EUROPÄISCHE PATENTANMELDUNG

(21) Anmeldenummer: **87112782.5**

(22) Anmeldetag: **02.09.87**

(51) Int. Cl.⁴: **B23B 27/14**

(30) Priorität: **06.09.86 DE 3630404**

(43) Veröffentlichungstag der Anmeldung:
**13.04.88 Patentblatt 88/15**

(84) Benannte Vertragsstaaten:
**AT BE CH DE ES FR GB IT LI NL SE**

(71) Anmelder: **MAPAL Fabrik für Präzisionswerkzeuge Dr. Kress KG Obere Bahnstrasse 13 Postfach 1520 D-7080 Aalen(DE)**

(72) Erfinder: **Kress, Dieter, Dr. Dipl.-Ing. Walkstrasse 87 D-7080 Aalen(DE)**
Erfinder: **Häberle, Friedrich Fliederstrasse 14 D-7089 Lauchheim(DE)**

(74) Vertreter: **Gleiss, Alf-Olav, Dipl.-Ing. Auf dem Haigst 29 D-7000 Stuttgart 70(DE)**

(54) **Schneideinsatz.**

(57) Es wird ein Schneideinsatz mit am Umfang des Schneideinsatzes gebildeten Schneidkantenabschnitten, an die sich von kreisbogenförmigen Spanleitstufen (3) begrenzte Spanflächen (2) anschließen, vorgeschlagen, der sich dadurch auszeichnet, daß die Spanleitstufen (3) bis unmittelbar an den Umfang des Schneideinsatzes (1) heranreichen und daß die Spanflächen (2) als durchgehende, sich von der Spanleitstufe (3) bis zu den Schneidkanten erstreckende Ebenen ausgebildet sind.

## Fig.1

EP 0 263 302 A2

## Schneideinsatz

Die Erfindung betrifft einen Schneideinsatz gemäß Oberbegriff des Anspruchs 1.

Aus der DE-OS 15 52 360 ist ein Schneideinsatz bekannt, der an seinem Umfang Schneidkantenabschnitte aufweist, an die sich von kreisbogenförmigen Spanleitstufen begrenzte Spanflächen anschließen. Bei der zerspanenden Bearbeitung von metallischen Werkstücken kommt der Ausbildung der Späne und damit der Ausbildung und Anordnung der Spanleitstufen besondere Bedeutung zu. Insbesondere mussen Stauungen beim Spanablauf, die beispielsweise bei langen Spänen auftreten, vermieden werden. Da die günstige Ausbildung der Späne von zahlreichen Parametern abhängt, insbesondere von dem zu bearbeitenden Werkstoff, der Schneid-und der Vorschubgeschwindigkeit sowie von der Schneidtiefe, muß fur jeden Zerspanungsvorgang der Abstand der Spanleitstufe von der Schneidkante besonders abgstimmt werden.

Zur Veränderung der wirksamen Spanleitstufe kann der Schneideinsatz verschwenkt werden. Dadurch ändert sich der Abstand der jeweils wirksamen Stelle der Spanleitstufe von der Schneidkante. Der bekannte Schneideinsatz hat den Nachteil, daß sich der Verlauf des Spans bei einer Änderung des Anstellwinkels der Schneidkante zum Werkstück nur sehr wenig beeinflussen läßt. Bei der Feinbearbeitung von Oberflächen ist eine ausreichende Beeinflussung des Spanverlaufs nicht möglich.

Es ist daher Aufgabe der Erfindung, einen Schneideinsatz zu schaffen, bei dem sich der Spanverlauf und damit auch die Länge der Späne in einem weiten Bereich optimal verändern läßt.

Diese Aufgabe wird bei einem Schneideinsatz der eingangs genannten Art mit Hilfe der in Anspruch 1 genannten Merkmale gelöst. Vorteil ist besonders, daß auch sehr feine Späne, wie insbeonsere bei der Feinbearbeitung eines Werkstücks entstehen, gebrochen werden können, weil die Spanleitstufen bis an die Schneidkante heranreichen. Der Verlauf der Späne ist uberdies besonders leicht vorhersehbar, weil die Spanflächen eben sind. Der Verlauf der Späne wird also nicht durch sich ändernde Radien der Spanfläche beeinflußt.

Bei einem bevorzugten Ausfuhrungsbeispiel gehen die Spanleitstufen im Bereich des Umfangs des Schneideinsatzes praktisch ineinander über. Dadurch ergibt sich, daß im wesentlichen der gesamte Umfang des Schneideinsatzes für die Bearbeitung von Oberflächen herangezogen werden kann.

Bei einem weiteren bevorzugten Ausführungsbeispiel weisen die Spanleitstufen jeweils gleiche Krümmungsradien auf. Das hat den Vorteil, daß bei Verschleiß eines Schneidkantenabschnittes der Schneideinsatz so verdreht werden kann, daß der nächste, benachbarte Schneidkantenabschnitt in Eingriff mit dem Werkstück kommt. Die Eigenschaften des Schneideinsatzes wiederholen sich folglich von Schneidkantenabschnitt zu Schneidkantenabschnitt.

Ein anderes bevorzugtes Ausführungsbeispiel zeichnet sich dadurch aus, daß die Spanstufen verschiedene Krümmungen aufweisen. Vorteil dieses Schneideinsatzes ist es, daß aufgrund der verschiedenen Spanbrechereigenschaften der Schneidkantenabschnitte mit den zugehörigen Spanleitstufen viele verschiedene Werkstoffe mit ein und demselben Schneideinsatz bearbeitet werden können.

Ein weiteres Ausfuhrungsbeispiel ist dadurch gekennzeichnet, daß die Schneidkantenabschnitte verschiedene Krümmungsradien aufweisen. Dadurch lassen sich mit ein und demselben Schneideinsatz wiederum eine Vielzahl verschiedener Schneideigenschaften erzielen.

Bei einem besonders bevorzugten Ausfuhrungsbeispiel ist der Schneideinsatz kreisförmig ausgebildet und weist sechs durch Spanstufen begrenzte Spanflächen auf. Die Spanleitstufen weisen jeweils dieselbe Krümmung auf, so daß sich sechs Bereiche mit übereinstimmenden Spanbrechereigenschaften ergeben.

Die Erfindung wird im folgenden anhand der Figuren näher erläutert. Es zeigen:

Fig. 1 eine Vorderansicht der Schneidplatte und

Fig. 2 einen senkrechten Schnitt entlang der Schnittlinie II - II der Fig. 1.

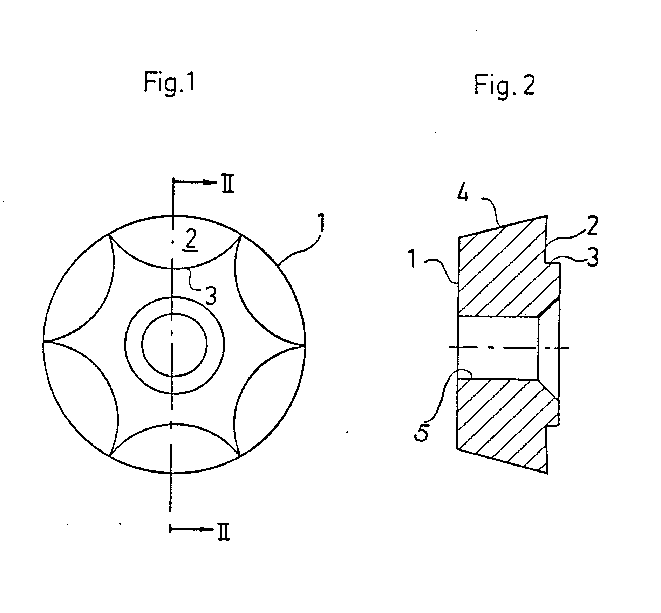

Die Schneidplatte 1 hat die Form einer ebenen Kreisplatte. Auf der Oberfläche der Kreisplatte erhebt sich eine ebene Fläche, die von kreislinienförmigen, die Spanleitstufen 3 bildenden Erhebungen begrenzt wird. Durch die Spanleitstufen werden Spanflächen 2 begrenzt. Insbesondere aus Fig. 2 ist ersichtlich, daß sich durch das Zentrum der Schneidplatte 1 eine Aufspannbohrung 5 erstreckt, durch die ein Befestigungsmittel zur Montage der Schneidplatte gefuhrt werden kann.

Die die Spanflächen 2 begrenzende Umfangslinie der Schneidplatte 1 bildet die Schneidkante, an die sich die am Umfang der Kreisplatte liegende Freifläche 4 anschließt.

Die Funktion der Schneidplatte wird im folgenden erläutert. Bei der Bearbeitung eines Werkstücks ist jeweils nur ein kleiner Teil der Schneidkanten mit dem Werkstück in Eingriff. Die bei der Bearbeitung entstehenden Späne bewegen sich entlang der Spanflächen 2 und stoßen an die Spanleitstufen 3 an, wo sie abgelenkt und gebrochen werden. Durch eine Verdrehung der Schneidplatte ist es möglich, den Abstand zwischen der wirksamen Schneidkante und der Spanleitstufe zu verändern. Dadurch, daß sie sich die Spanleitstufen 3 bis zur Umfangslinie der Schneidplatte 1 erstrecken, können auch sehr feine Späne, wie sie insbesondere bei der Feinbearbeitung von Werkstücken entstehen, gebrochen werden. Dadurch, daß die Spanflächen eben ausgebildet sind, wird der Spanablauf ausschließlich vom Abstand der Schneidkanten zur Spanleitstufe 3 bestimmt. Dadurch lassen sich die Spanbrechereigenschaften des Schneideinsatzes besonders leicht vorhersagen. Dadurch, daß auch feine Späne mit Sicherheit gebrochen werden können, ist gewährleistet, daß auch bei der Bearbeitung von verschiedenen Werkstoffen immer kurze Späne erreichbar sind, wodurch sich die Fertigungssicherheit erhöht. Die Beseitigung der Späne kann nicht durch lange Späne behindert werden.

## Ansprüche

1. Schneideinsatz mit am Umfang des Schneideinsatzes gebildeten Schneidkantenabschnitten, an die sich von kreisbogenförmigen Spanleitstufen begrenzte Spanflächen anschließen, **dadurch gekennzeichnet,** daß die Spanleitstufen (3) bis unmittelbar an den Umfang des Schneideinsatzes (1) heranreichen, und daß die Spanflächen (2) als durchgehende, sich von den Spanleitstufen (3) bis zu den Schneidkanten erstreckenden Ebenen ausgebildet sind.

2. Schneideinsatz nach Anspruch 1, **dadurch gekennzeichnet,** daß die Spanleitstufen (3) im Bereich des Umfangs des Schneideinsatzes (1) ineinander übergehen.

3. Schneideinsatz nach Anspruch 1 oder 2, **dadurch gekennzeichnet,** daß die Spanleitstufen (3) dieselbe Krümmung aufweisen.

4. Schneideinsatz nach Anspruch 1 oder 2, **dadurch gekennzeichnet,** daß die Spanleitstufen (3) verschiedene Krümmungsradien aufweisen.

5. Schneideinsatz nach einem der Ansprüche 1 bis 4, **dadurch gekennzeichnet,** daß die Schneidkantenabschnitte verschiedene Krümmungsradien aufweisen.

6. Schneideinsatz nach einem der Ansprüche 1 bis 5, **dadurch gekennzeichnet,** daß der Schneideinsatz kreisförmig ausgebildet ist und sechs durch Spanleitstufen (3) begrenzte Spanflächen (2) aufweist.

Fig.1

Fig. 2

Patentanwalte Dr -Ing *Eugen Maier* – Dr -Ing *Eckhard Wolf*
Pischekstraße 19 - 7000 Stuttgart 1